Europäisches Patentamt

European Patent Office

Office européen des brevets

(11) Publication number: **0 396 146**
**A2**

(12) **EUROPEAN PATENT APPLICATION**

(21) Application number: **90108455.8**

(22) Date of filing: **04.05.90**

(51) Int. Cl.5: **C22C 1/09, C04B 30/02,**
**C04B 35/80, //(C04B30/02,**
**14:32,14:38)**

(30) Priority: **05.05.89 IT 2037889**

(43) Date of publication of application:
**07.11.90 Bulletin 90/45**

(84) Designated Contracting States:
**AT BE CH DE DK ES FR GB GR LI NL SE**

(71) Applicant: **KERAMONT ITALIA S.p.A.**
**31, Foro Buonaparte**
**Milan(IT)**

(72) Inventor: **Giunchi, Giovanni**
**15, Via Gallotti**
**I-28100 Novara(IT)**
Inventor: **Adembri, Andrea, Dr.-Chem.**
**20, Via Mameli**
**I-50131 Firenze(IT)**

(74) Representative: **Weinhold, Peter, Dr. et al**
**Patentanwälte Dipl.-Ing. G. Dannenberg Dr.**
**P. Weinhold Dr. D. Gudel Dipl.-Ing. S.**
**Schubert Dr. P. Barz Siegfriedstrasse 8**
**D-8000 München 40(DE)**

(54) **Ceramic preforms having high mechanical strength, a process for their preparation and metal matrix composites obtained therefrom.**

(57) Described are preforms for metal matrix composites consisting of ceramic material belonging to the class of oxides, nitrides, carbides, borides, oxynitrides and the like, prevailingly in an acicular form and having a monocrystalline or polycrystalline structure, having a density of from 0.2 to 1.6 $g/cm^3$ and a porosity of from 50 to 95%.

EP 0 396 146 A2

# CERAMIC PREFORMS HAVING HIGH MECHANICAL STRENGTH, A PROCESS FOR THEIR PREPARATION AND METAL MATRIX COMPOSITES OBTAINED THEREFROM

The present invention relates to ceramic preforms having high mechanical strength for metal matrix composites, to processes for their preparation, and to the use thereof for preparing shaped bodies according to methods such as infiltration, by molten metals, injection, die-casting and the like.

It is known to prepare composites having a metal or, optionally, plastic matrix by using, as reinforcing material, fibres or whiskers of ceramic material such as silicon carbide.

These composites can be prepared according to different techniques, for instance by mixing the fibrous material with metal powders and by subjecting the resulting mixture to a thermal treatment, generally under pressure, in order to melt the metal matrix. Alternatively a fibrous ceramic material can be used for preparing porous preforms to be infiltrated by a molten metal according to suitable methods.

Methods for preparing preforms based on fibres or whiskers are described in the literature, for instance, in US-A-4,587,774 and 4,740,428. According to these methods, preforms suitable for being infiltrated by means of a molten metal can be prepared either by letting the whiskers grow directly in a porous mass or by dispersing the whiskers as such in polar liquids, such as alcohols, water, ketones and the like. To the resulting dispersions there can be added a polymeric binder which is soluble in the above polar liquids and thereafter said dispersions may be poured into moulds having the desired shape and converted into porous preforms, after having removed, by heating or other techniques, the solvent and the optional polymeric binder.

In both cases preforms are obtained which have a high porosity and consist of an agglomerate of short fibres and/or whiskers having an unoriented distribution and in which a homogeneous and uniform distribution of the fibrous material cannot be realized.

Said porous preforms can be infiltrated with a molten metal, such as aluminum, giving rise to finished or semifinished products which subsequently may be treated according to common metallurgic processes.

The preforms obtained by the processes of the prior art, however, have drawbacks which make their use for the preparation of metal matrix composite structures problematic.

In particular, the high porosity, together with the poor cohesion of the fibrous material, gives rise to very poor mechanical properties and to a brittleness which prevents easy handling of said preforms.

Moreover, said brittleness entails considerable problems concerning the environment, due to the characteristics of the fibrous material the preforms are composed of, particularly when the diameters of the fibres are below one $\mu$m.

This drawback of brittleness also shows during the infiltration phase, since the molten metal can exert a partial or total destructive action on the preform, with the result that the distribution of the fibrous material in the composite is not as homogeneous as desired any more.

Therefore, in order to avoid said further drawback, sophisticated and, consequently, expensive infiltration techniques are required, such as melt spraying, vapor deposition, vapor infiltration, etc.

Moreover, the composites obtained from the above types of preforms are characterized by isotropic mechanical proper ties, because the fibres or whiskers acting as reinforcing elements are statistically distributed within the preform which prevents the production of composites showing anisotropic mechanical properties. These anisotropic properties can generally be achieved by orientation of the reinforcing material, which at present may be effected by subjecting the composite to mechanical treatments at high temperatures, e.g., drawing, calendering and the like.

It has now been found that preforms for metal matrix composites can be prepared which do not show the above drawbacks, because they have very satisfactory mechanical properties, due to the fibrous material being bound by a ceramic phase, and because they are also able to directly yield composites having anisotropic mechanical properties,as the fibrous material can be oriented in the desired manner and with the desired measures.

Therefore, object of the present invention are preforms for metal matrix composites based on fibrous ceramic material bound chemically by one or more nitridic ceramic phases, said preforms having a density ranging from 0.2 to 1.6 g/cm$^3$, a porosity ranging from 50 to 95%, and an ultimate bending strength of at least 5 MN/m$^2$ and generally ranging from 10 to 20 MN/m$^2$.

The percent porosity of the preforms of the present invention is determined by the following relationship:

EP 0 396 146 A2

$$\text{porosity} = \left(1 - \frac{d}{d_o}\right) \times 100$$

wherein $d$ is the measured density of the preform and $d_o$ is the density of the material the preform is composed of. Ultimate bending strength is measured according to ASTM-D 790.

The material the preforms of the present invention are composed of is a fibrous ceramic material which preferably is present in an acicular form and has a monocrystalline or polycrystalline structure, bound by a crystalline ceramic material in the form of a nitride. Examples of fibrous materials are whiskers, short fibres, fibrils and the like or mixtures thereof, whereas examples of binding crystalline ceramic materials are aluminum nitride, silicon nitride or mixtures thereof.

The length of the short fibres and fibrils generally ranges from 0.01 to 10 mm and their diameter usually ranges from 1 to 50 $\mu$m. The article by A.R. Bunsell "Fibre reinforcements for composite materials", vol. II/Elsevier (1988), page 427, is a literature example in which the preparation of ceramic fibres and fibrils is described.

The whiskers generally are obtained by reaction in the vapor phase according to well known techniques, an example of which is given in US-A-3,754,075. Their diameters usually range from 0.1 to 10 $\mu$m, whereas their length commonly is 5 to 500 times their diameter.

Any ceramic product capable of being converted into fibrous material can be used for the preparation of the present preforms. Use can be made, for instance, of oxides, nitrides, carbides, borides, oxynitrides and the like, such as alumina, titania, silica, zirconia, silicon nitride, titanium nitride, aluminum nitride, boron nitride, silicon carbide, boron carbide, titanium carbide, titanium boride, zirconium boride, aluminum boride, aluminum oxynitride, aluminum and silicon oxynitride and the like.

Silicon carbide and silicon nitride whiskers are the preferred fibrous materials used as constituent material of the preforms of the present invention.

The preforms of the present invention can be obtained by evaporating a liquid base from a dispersion containing a fibrous ceramic material, a fine metal powder and a polymeric binder and thereafter treating the product obtained at high temperatures in the presence of a nitride-forming gas.

More particularly, a preferred process for the preparation of preforms for metal matrix composites of the present invention comprises:

(a) preparing a dispersion, in a liquid base, of a fibrous ceramic material, a fine metal powder, a polymeric binder and, optionally, a dispersing and/or plasticizing agent;

(b) preparing elemental units by pouring the dispersion of step (a) through a system which orients the fibrous material in uniaxial manner;

(c) evaporating the liquid base from the poured elemental unit obtained in step (b);

(d) forming a semifinished product by superimposing (overlaying) and pressing several (at least two) evaporated elemental units of step (c) according to the desired thickness and profile of the preform;

(e) treating the semifinished product of step (d) in order to degrade (decompose) and/or debind the binder; and

(f) heating at high temperature the product obtained in step (e) in the presence of a stream of a nitride-forming gas.

When the preform comprises a single elemental unit as such, step (d) of the present process may be omitted.

According to a preferred embodiment of the process of the present invention, the liquid base is selected from water and organic solvents, e.g., alcohols such as ethanol, pro panol, isopropanol, butanol and the like, ketones such as acetone, methylethylketone and the like, aromatic hydrocarbons such as benzene, toluene, xylenes and the like, chlorinated hydrocarbons such as methylene chloride, trichloroethylene, chloroform and the like and mixtures thereof.

The material comprising a fibrous ceramic phase, preferably whiskers, and a metal powder is deagglomerated in the liquid base according to known techniques and is used in amounts ranging from 5 to 80%, preferably from 10 to 50% by weight, based on the total weight of the dispersion.

The weight ratio of metal powder to fibrous ceramic phase generally ranges from 0.05 to 5, preferably from 0.1 to 2. Metals particularly suitable for the metal powder are aluminum and silicon having granulometries below 100 $\mu$m and preferably below 40 $\mu$m.

The binder preferably is soluble in the dispersing liquid and is of a type such as to allow the obtainment, after evaporation of the liquid, of flexible poured elemental units containing the fibrous material. Examples of polymeric binders are polyolefins such as polyethylene, polypropylene, ethylene-propylene

3

copolymers and the like, aromatic vinyl polymers such as polystyrene, vinyl polymers and copolymers such as polyvinyl alcohol, polyvinyl acetate, polyvinyl butyral and the like, acrylic polymers such polymethyl-and polyethylacrylate and polymethylmethacrylate and the like, and celluloses such as carboxymethyl cellulose and the like.

The polymeric binder generally is used in amounts ranging from 0.5 to 20%, preferably from 1 to 15% by weight, based on the total weight of the composition.

It also is possible to add to the dispersion, in amounts ranging from 0 to 20% by weight based on the total weight, dispersants and/or plasticizers selected, e.g., from organic phosphates such as alkyl and alkylaryl phosphates, phthalates such as dioctyl phthalate, di-2-ethylhexyl phthalate, dibutyl phthalate and the like, esters of organic acids such as butyl stearate, butyl sebacate, dioctyl sebacate, dioctyl adipate, glyceryl trioleate and the like, polyols such as glycerol, sorbitol and the like and polyalkylene oxides such as polyethylene glycol and the like.

The dispersion thus obtained, having a viscosity generally ranging from 500 to 10,000 mPa.s, is poured, either under pressure or without pressure, through an orienting system in order to obtain an elemental unit in which the fibrous material is oriented unidirectionally.

These elemental units can have different shapes such as, for instance, filaments, tapes, sheets etc. and can be obtained by known techniques, such as extrusion, calendering, rolling, tape casting, etc.

Preferred elemental units according to the present invention are laminates, such as tapes and sheets, obtained by tape casting. This technology is well known and is described in the article by James Reed, "Introduction to the principles of ceramics processing", 1988, J.Wiley and Sons, page 397.

In the case of elemental units having a laminar shape, the thickness generally is not higher than 5 mm and preferably ranges from 0.05 to 3 mm.

The evaporation of the liquid generally is carried out in a thermoregulated environment and in a uniform way, in order to avoid tensions or fractures on the surface of the evaporated elemental unit.

A plurality of evaporated elemental units may be superimposed and pressed to yield a semifinished product having the shape and size of the desired preform.

To this end use can be made of moulds, cores or supports shaped according to the desired preform and of pressing, preferably at temperatures near the softening temperatures of the polymeric binder.

As the elemental units contain the fibrous material which is oriented unidirectionally, the overlaying can be carried out in a manner such that the whole fibrous material has the same orientation. In this case the obtained preforms are particularly suitable for the preparation of metal matrix composites showing anisotropic mechanical properties.

The semifinished product obtained after the stacking of the individual elemental units may be subjected to a thermal treatment at temperatures ranging from 300 to 500°C in order to degrade (decompose) and debind the polymeric binder.

Alternatively, the polymeric binder can be removed by a stream of supercritical gas. Examples of useful gases are carbon dioxide or hydrocarbons such as ethane, propane and the like.

The product obtained after degradation and/or debinding of the binder is heated at temperatures up to 1,500°C and generally ranging from 1,000 to 1,500°C, in the presence of a stream of at least one nitride-forming gas, such as nitrogen, nitrogen/hydrogen mixtures, ammonia, ammonia/nitrogen mixtures, etc.

According to a further alternative and in the case of thermal debinding, steps (e) and (f) of the process of the present invention can be carried out in a single step.

The preforms based on fibrous ceramic material obtainable by the process of the present invention can be used for preparing metal matrix composites by infiltration, injection, die-casting, etc.

Examples of metals or metalloids which can be used for preparing said composites are aluminum, silicon, magnesium, titanium, zirconium, zinc, tin, iron, nickel, chromium, antimony, lead, copper, gold, silver and the like or alloys thereof.

The following examples are given for merely illustrative purposes and do not in any way limit the scope of the present invention.

EXAMPLE 1

In a typical preparation use was made of silicon carbide whiskers, produced by TOKAI Company and having the following dimensions: diameter = 0.3 to 0.5 μm; length = 30 to 50 μm; and of aluminum powder having a granulometry below 40 μm. 1.5 g of a dispersing agent (Hypermer ®-KDI, produced by Imperial Chemical Industries Company) were dissolved in 300 g of a mixture of trichloroethylene/ethanol (2.6/1 by weight). After having dissolved the dispersing agent, 75 g of whiskers and 63 g of aluminum were added to the solution by stirring the whole mixture by means of ultrsonic waves.

Separately, in a 1 ltr. polyethylene vessel with a narrow inlet a solution of 30 g of polyvinyl butyral (Butvar® 76 produced by Monsanto Company), 30 g of polyethylene glycol having an average molecular weight of 1500, 18 g of dioctyl phthalate and 128 g of the above solvent was prepared.

The suspension of whiskers and aluminum powder and 650 g of silica balls having a diameter of 15 mm were introduced into said vessel.

The suspension was stirred in a ball-mill for 6 hours, reaching a final viscosity of about 1500 cPs.

Laminates being 700 μm thick were prepared by using the suspension thus obtained according to the tape casting technique. The laminates, after removal of the solvent at room temperature, were cut out according to rectangular and circular shapes, overlaid and hot-pressed to form parallelepipeds and cylinders.

Said semifinished products were subjected to a thermal treatment at up to 500° C under a nitrogen stream and were kept at this temperature for about 1 hour and subsequently at up to 1000° C for 2 hours under an ammonia stream (10 l/h).

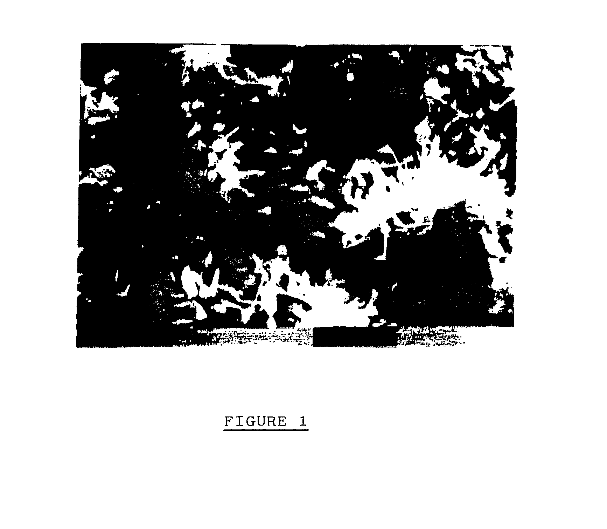

The preform thus obtained had a density of 0.8 g/cm³, a porosity of 75%, an uniaxial distribution of the whiskers, and an ultimate bending strength of 10.5 MN/m². The nitridic binding phase is shown in the micrography of figure 1 (5000-fold enlargement); the disappearance of the metal (aluminum) phase and the appearance of the aluminum nitride phase were confirmed by X-ray diffraction.

EXAMPLE 2

The preform of example 1 was used to form composites with an A 357 alloy of aluminum/silicon/magnesium (92.5/7/0.5) by injection of the molten metal under pressure.

The operating conditions were as follows:
Temperature of the melt: 650° C
temperature of the preform: 600° C
injection pressure: 9 MPa
infiltration time: 30 seconds

Obtained were composites having the properties set forth in the following table.

TABLE

| Mechanical tests carried out on the composite obtained according to example 2. | | |
|---|---|---|
| PROPERTY (1) | A 357 ALLOY | COMPOSITE |
| Vickers microhardness (200 g)(kg/mm²) (ASTM E384-73) | 65.8 | 95 (2) 105 (3) |
| Coefficient of thermal expansion (50-30° C) ($10^{-6}$/° C) (Perkin Elmer TMA 7 apparatus) | 21.6 | 14 (2) 16.5 (3) |
| Tensile strength (MPa) (ASTM D638) | 200 | 270 |

(1) Samples which had not been subjected to any thermal treatment
(2) Measurement carried out in a direction parallel to the whiskers
(3) Measurement carried out in a direction perpendicular to the whiskers.

**Claims**

1. Preforms for metal matrix composites based on fibrous ceramic material bound chemically by one or more nitridic ceramic phases and having a density of from 0.2 to 1.6 g/cm³, a porosity ranging from 50 to 95%, and an ultimate bending strength of at least 5 MN/m².

2. Preforms according to claim 1, wherein the preform material is a fibrous ceramic material having an acicular form and a monocrystalline or polycrystalline structure, bound by a crystalline ceramic material in the form of a nitride.

3. Preforms according to any one of claims 1 and 2, wherein the fibrous ceramic material is selected from whiskers, short fibres, fibrils and mixtures thereof.

4. Preforms according to any one of claims 1 to 3, wherein the crystalline ceramic binding material is selected from the nitrides of aluminum and silicon and mixtures thereof.

5. Preforms according to any one of the preceding claims, wherein the fibrous material is obtained from ceramic products selected from oxides, nitrides, carbides, borides and oxynitrides.

6. Preforms according to any one of the preceding claims, wherein the fibrous material comprises silicon carbide or silicon nitride whiskers.

7. Process for the preparation of the preforms according to any one of the preceding claims, wherein a liquid base is evaporated from a dispersion containing a fibrous ceramic material, a fine metal powder and a polymeric binder whereafter the product thus obtained is treated at elevated temperature in the presence of a nitride-forming gas.

8. Process according to claim 7, comprising:

(a) preparing a dispersion, in a liquid base, of a fibrous ceramic material, a fine metal powder, a polymeric binder and, optionally, a dispersant and/or plasticizer;

(b) preparing elemental units by pouring the dispersion through a system which orients the fibrous material uniaxially;

(c) evaporating the liquid base from the poured elemental unit;

(d) forming a semifinished product by superimposing and pressing several evaporated elemental units according to the desired thickness and profile of the pre-shaped product;

(e) treating the semifinished product in order to degrade and /or debind the binder; and

(f) heating the product obtained in step (e) at high temperatures, in the presence of a stream of a nitride-forming gas.

9. Process according to claim 8, wherein the liquid base is selected from water, alcohols, ketones, aromatic hydrocarbons, chlorinated hydrocarbons and mixtures thereof.

10. Process according to any one of claims 8 and 9, wherein the material comprising the fibrous ceramic phase and the metal powder is used in amounts ranging from 5 to 80%, preferably from 10 to 50% by weight, based on the total weight of the dispersion.

11. Process according to any one of claims 8 to 10, wherein the weight ratio of metal powder to fibrous ceramic phase ranges from 0.05 to 5, preferably from 0.1 to 2.

12. Process according to any one of claims 8 to 11, wherein the metal of the metal powder is selected from aluminum and silicon having a granulometry below 100 $\mu$m, and preferably below 40 $\mu$m.

13. Process according to any one of claims 8 to 12, wherein the binder, which preferably is soluble in the dispersing liquid, is selected from aromatic vinyl polymers, vinyl polymers and copolymers, acrylic polymers, celluloses and mixtures thereof.

14. Process according to any one of claims 8 to 13, wherein the binder is used in amounts ranging from 0.5 to 20%, preferably from 1 to 15% by weight, based on the total weight of the composition.

15. Process according to any one of claims 8 to 14, wherein from 0 to 20% by weight, based on the total weight of the dispersion, of a dispersant and/or plasticizer selected from organic phosphates, phthalates, esters of organic acids, polyols, polyalkylene oxides and mixtures thereof are employed.

16. Process according to any one of claims 8 to 15, wherein the elemental units comprise filaments or laminates, obtained by extrusion, calendering, rolling or tape casting techniques.

17. Process according to claim 16, wherein the elemental units are laminates, such as tapes and sheets, obtained by casting, the thickness of the laminates preferably being not more than 5 mm, particularly ranging from 0.05 to 3 mm.

18. Process according to any one of claims 8 to 17, wherein the evaporation of the liquid is carried out in a thermoregulated environment.

19. Process according to any one of claims 8 to 18, wherein the superimposing of the elemental units is carried out in a manner such that the whole fibrous material at least approximately has the same orientation.

20. Process according to any one of claims 8 to 19, wherein the semifinished product is subjected to a thermal treatment at temperatures ranging from 300 to 500° C in order to degrade and/or debind the polymeric binder.

21. Process according to any one of claims 8 to 19, wherein the polymeric binder is removed by a stream of supercritical gas.

22. Process according to any one of claims 8 to 21, wherein the product obtained after degradation and/or debinding of the binder is heated at temperatures up to 1,500°C in the presence of a stream of at least one nitride-forming gas.

23. Use of the ceramic preforms according to any one of claims 1 to 7 or obtainable according to the processes of any one of claims 8 to 22 for the preparation of metal matrix composites, particularly by using infiltration, injection and/or die-casting techniques.

FIGURE 1